# EUROPEAN PATENT APPLICATION

(11) **EP 0 878 637 A2**
(43) Date of publication of application: **18.11.1998**
(21) Application number: 98108636.6
(22) Date of filing: 12.05.1998
(51) Int. Cl.: F16F 1/02

(54) **Coated coil spring, particularly for automotive suspensions**

(30) Priority: 16.05.1997 IT TO970416
(71) Applicant: Rejna S.p.A., 20121 Milano (IT)
(72) Inventor: Muzio, Carlo, 10015 Ivrea (IT)
(74) Representative: Jorio, Paolo

(57) **Abstract**

An automotive suspension coil spring (1) of any known shape and defined by a metal body wound into turns is provided on a lateral surface (2) with a coating (3) of polymeric material; the coating (3) being defined by a continuous 100 to 500 µm thick layer of paint (4) formed from a polymeric material of 50 to 100 Shore A hardness. The paint from which the coating (3) is formed may be a thermoplastic, e.g. powdered, paint preferably selected from the group including: PVC, PU, PPA and mixtures thereof. In particular, the paint is selected from the following commercial products: Smaltoplast™, Abcite™, Plascoat PPA 571™, Desmopan™. The coating (3) is preferably applied to the surface (2) of the turns with the spring (1) at a relatively high temperature (about 200÷250°C), e.g. by immersing the spring (1) in a fluidized-bed bath containing the paint, and with no preliminary application of adhesion promoter.

## Description

The present invention relates to a coil spring, particularly for automotive suspensions, with a coating of polymeric material.

As is known, automotive suspensions commonly feature coil springs, the end turn of which normally rests on a metal supporting plate integral with the shock-absorbers. Direct connection of the spring to a metal element, however, does not prevent the spring from knocking against the plate when the vehicle is moving, and the noise produced is far from negligible, particularly on vehicles of modern design in which great care is taken to eliminate any source of noise.

To prevent the spring from knocking, special supports made of elastomeric material are used, and which are integral with the supporting plate and designed to receive the last turn of the spring. Such a solution, however, involves considerable cost and is therefore not used on recently designed vehicles.

Noise is also produced by the turns of the spring knocking against one another in use, and is especially noticeable in the case of variably flexible springs, which comprise a certain number of turns with a smaller pitch than the others, and which work in contact with one another over an already fairly low vehicle load.

Normal suspension spring coatings fail to provide for eliminating the above drawbacks.

The coil springs of automotive suspensions are normally given a thin coating of epoxy paint, primarily to protect the metal springs from corrosion. As is known, epoxy resins are classified as heat-setting polymeric materials, so that the resulting coatings (typically 40÷ 50 µm thick) are substantially rigid and fairly hard. To give a rough indication, the epoxy paints normally used for suspension springs have a hardness of about 35 degrees on the so-called "rocker-sword" scale (a special scale commonly used in the paint industry).

On account of the above properties, the coatings formed from such paints are fairly fragile, adhere closely to the metal surface of the springs, and in no way provide for damping the noise induced by connection of the spring to the supporting plate, or by the turns of the spring knocking against one another. Moreover, being so fragile, the coatings are worn off rapidly by mutual knocking of the turns of the spring, thus exposing the underlying metal to corrosion.

One possible solution - that of fitting the spring with a sheath of elastomeric or, at any rate, fairly pliable material - is difficult to actually implement, and practically impossible in the case of increasingly common variable-pitch springs.

It is an object of the present invention to provide a coil spring, particularly for automotive suspensions, designed to eliminate the aforementioned drawbacks, and which in particular produces very little in-service noise, is cheap and easy to produce, and is effectively protected against corrosion.

According to the present invention, there is provided a coil spring, particularly for an automotive suspension, comprising a metal body wound into turns, and a coating of polymeric material on a lateral surface of said turns; characterized in that said coating comprises a continuous layer of paint comprising a polymeric material of 50 to 100 Shore A hardness.

Preferably, said layer of paint is of a thickness ranging between 100 and 500 µm, and is formed from a material selected from the group comprising: PVC, PU, PPA, mixtures thereof and other mechanically equivalent polymers or copolymers.

According to a preferred embodiment, said layer is formed from a thermoplastic polymeric material preferably selected from the group comprising the following commercial products : Smaltoplast™, Abcite™, Plascoat PPA 571™, Desmopan™ and similar.

As such, the spring according to the present invention is effectively protected against corrosion, while at the same time the damping effect of the polymeric coating interposed between the turns provides for greatly reducing the noise produced by the spring.

The spring coating according to the present invention may be applied easily and cheaply in the same way as conventional paints, but is surprisingly effective in terms of noise damping. That is, the coating performs in the same way as an elastomer : the hardness of the coating material in fact is similar to that of rubber, and much lower than that of paints normally used for this type of application (as stated, the hardness of a typical epoxy paint is about one order of magnitude higher).

A number of non-limiting embodiments of the present invention will be described by way of example with reference to the accompanying drawings, in which:
Figure 1 shows a section of part of a coil spring in accordance with the present invention;
Figure 2 shows a coil spring noise testing device;
Figure 3 shows the noise test results, using the Figure 2 device, of springs with different types of coating.

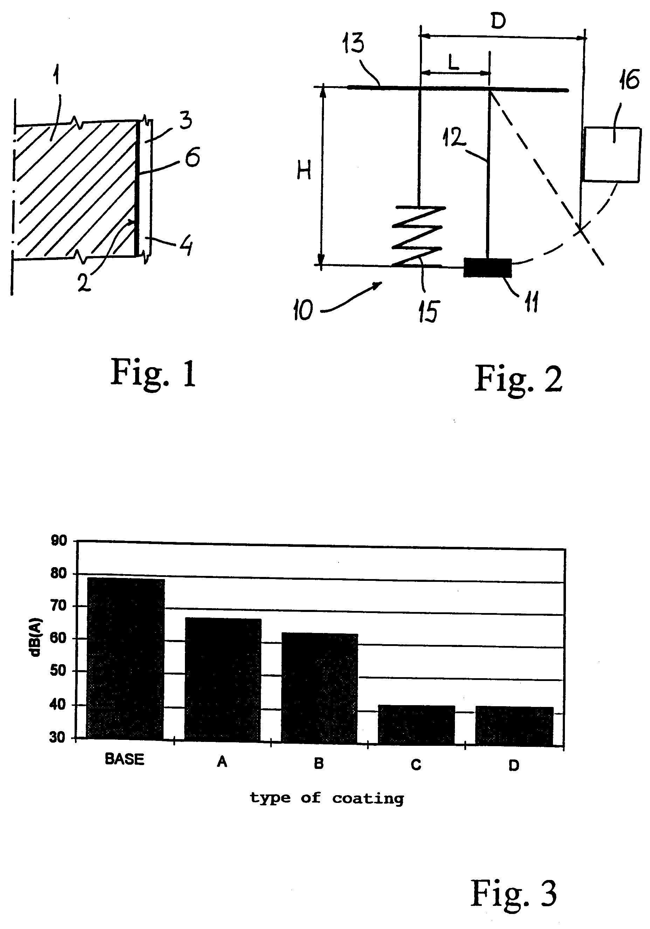

With reference to Figure 1, a known automotive suspension coil spring 1 comprises a metal body wound into turns, a lateral surface 2 of which is applied with a coating 3 of polymeric material.

In the example shown, coating 3 comprises a continuous layer 4, of 100 to 500 µm thickness, of a paint comprising a polymeric material of 50 to 100 Shore A hardness; which material is preferably a thermoplastic polymer.

The polymeric paint with which coating 3 is formed is preferably a powdered paint. For example, as shown in detail later on, good results have been obtained using a range of commercial products such as Smaltoplast™, Abcite™, Plascoat PPA 571™, Desmopan™ and similar.

The coating according to the present invention may be applied easily during manufacture of the spring. The polymeric material of the coating in fact is applied after the steel wire has been wound, by hot permanent deformation, to form the spring, and while the spring is still at a relatively high temperature (about 200÷250°C). The polymeric paint of the coating may, for example, be sprayed on to the surface of the spring, or applied by immersing the spring in a fluidized-bed bath containing the paint.

The coating is preferably applied directly to the surface of the spring with no preliminary application of adhesion promoters, so that, by virtue of the characteristics of the polymeric paint, which adheres poorly to metal substrates, and of the difference in shrinkage of the polymeric paint and spring material, the coating does not adhere completely or firmly to the surface of the spring, thus improving the damping performance of the coating. In other words, by not adhering completely to the surface of the spring, the coating according to the invention forms a sort of sheath about the spring, but with none of the practical disadvantages of an actual sheath, by being applied in the same way as conventional paint.

In certain applications and when using particularly soft materials, however, a layer 6 of adhesion promoter (primer) may of course be interposed between lateral surface 2 of the spring and coating 3.

Figure 2 shows schematically a test device for determining the noise level of a coil spring. The device, indicated as a whole by 10, comprises a hammer 11 hung by a wire 12 (or by a rigid element) at a vertical distance H from a fixed support 13 so as to oscillate freely in a vertical plane. A spring 15 to be noise tested is also hung vertically from fixed support 13 with a respective longitudinal axis at a distance L from wire 12. Like hammer 11, the last turn of spring 15 is also located at distance H from support 13. Device 10 also comprises a known detector (phonometer) 16 for measuring the noise level.

To determine the noise level of a spring 15 with a given type of coating, hammer 11 is set to a predetermined position, i.e. to a predetermined distance D from spring 15, and is dropped on to the spring. The noise generated by hammer 11 striking spring 15 is detected and its intensity determined by detector 16, so that the noise levels of springs with different types of coatings may be compared to determine the most effective.

Tests were carried out by the Applicant's technicians using a 0.5 kg steel hammer 11 hung 740 mm beneath support 13 and at a distance of 200 mm from the axis of spring 15; hammer 11 was dropped from a horizontal distance of 400 mm from the axis of spring 15 (that is, with reference to Figure 2 : H = 740 mm, L = 200 mm and D = 400 mm); and each spring tested was subjected to a succession of nine blows in 60 seconds.

Table 1 shows the test results, under the above conditions, of identical springs with different coatings, namely : a spring with a straightforward epoxy paint coating of the type currently used (indicated "base" in the Table); and springs with different polymeric material coatings according to the present invention (indicated "A", "B", "C" and "D" in the Table, with Abcite™, Plascoat PPA 571™, Smaltoplast™ and Desmopan™ coatings respectively).

The test results in Table 1 are reproduced graphically in Figure 3, which clearly shows the drastic reduction in noise level, as compared with a traditionally printed spring, by applying the coating according to the present invention. The best results were obtained using PVC (Smaltoplast™) and Desmopan™.

**TABLE 1**

| Type of coating | Noise level dB(A) |
|---|---|
| BASE | 78.6 |
| A | 66.9 |
| B | 62.8 |
| C | 41.5 |
| D | 41.5 |

## Claims

1. A coil spring, particularly for an automotive suspension, comprising a metal body wound into turns, and a coating of polymeric material on a lateral surface of said turns; characterized in that said coating comprises a continuous layer of paint comprising a polymeric material of 50 to 100 Shore A hardness.

2. A coil spring as claimed in Claim 1, characterized in that said layer of paint is of a thickness ranging between 100 and 500 µm.

3. A coil spring as claimed in Claim 1 or 2, characterized in that said layer of paint is formed from a polymeric material selected from the group comprising: PVC, PU, PPA, mixtures thereof and mechanically equivalent polymers or copolymers.

4. A coil spring as claimed in Claim 3, characterized in that said layer of paint is formed from a thermoplastic polymeric material preferably selected from the group comprising the following commercial products : Smaltoplast™, Abcite™, Plascoat PPA 571™, Desmopan™ and similar.

5. A coil spring as claimed in one of the foregoing Claims from 1 to 4, characterized by also comprising a layer of adhesion promoter (primer); said layer of adhesion promoter being interposed between said lateral surface of said turns and said layer of paint.

6. Use of a polymeric paint for forming a noise-damping coating for an elastic mechanical member, in particular for an automotive suspension coil spring; characterized in that said polymeric paint is defined by a thermoplastic material of 50 to 100 Shore A hardness.
